(19) **Europäisches Patentamt / European Patent Office / Office européen des brevets**

(11) **EP 4 354 930 A1**

(12) # EUROPEAN PATENT APPLICATION
published in accordance with Art. 153(4) EPC

(43) Date of publication:
**17.04.2024 Bulletin 2024/16**

(21) Application number: **22848332.7**

(22) Date of filing: **19.07.2022**

(51) International Patent Classification (IPC):
**H04W 16/14** (2009.01)

(52) Cooperative Patent Classification (CPC):
**H04W 16/14; H04W 24/02**

(86) International application number:
**PCT/CN2022/106420**

(87) International publication number:
**WO 2023/005727 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2021 CN 202110875671**

(71) Applicant: **Huawei Technologies Co., Ltd.
Longgang
Shenzhen, Guangdong 518129 (CN)**

(72) Inventor: **HUI, Shaobo
Shenzhen, Guangdong 518129 (CN)**

(74) Representative: **Huawei European IPR
Huawei Technologies Duesseldorf GmbH
Riesstraße 25
80992 München (DE)**

(54) **INTERFERENCE DETECTION METHOD, AND DEVICE**

(57) This application provides an interference detection method and a device. The method may be applied to a scenario in which a wireless access point AP device is connected to a plurality of station STA devices. In the method, the wireless access point AP device first determines an idle station device in the plurality of station STA devices connected to the wireless access point AP device, and then sends an interference detection indication message to the idle station STA device, where the interference detection indication message includes a channel identifier and a required interference measurement factor. Then, the station STA device may perform interference detection on a channel indicated by the wireless access point AP device, to obtain an interference detection result, and send the interference detection result to the wireless access point AP device. According to the method in this application, interference detection may be performed by using an idle station device, to avoid an impact of Wi-Fi interference on performance of a wireless access point AP device, thereby improving data transmission performance and user experience.

FIG. 6

Processed by Luminess, 75001 PARIS (FR)

**Description**

**CROSS-REFERENCE TO RELATED APPLICATIONS**

This application claims priority to Chinese Patent Application No. 202110875671.2, filed with the China National Intellectual Property Administration on July 30, 2021 and entitled "INTERFERENCE DETECTION METHOD AND DEVICE", which is incorporated herein by reference in its entirety.

**TECHNICAL FIELD**

This application relates to the field of communication technologies, and in particular, to an interference detection method and a device.

**BACKGROUND**

With the gradual popularization of smart home, there are more wireless fidelity (wireless fidelity, Wi-Fi) smart devices at home, such as a notebook computer and a smartphone. Each smart device may be referred to as one station (station, STA) device. In other words, a plurality of STA devices may be connected to one wireless access point (access point, AP) device, for example, a same router.

Because Wi-Fi is an unlicensed (unlicense) spectrum resource, and the spectrum resource is shared by all short-range communication protocols, signal interference may occur in wireless communication between devices. Currently, an AP device usually performs interference scanning on a channel in different time segments, to detect a signal interference status of each channel. Specifically, the AP device sends data in a T1 time segment, and performs the interference scanning on the channel in a T2 time segment. However, the AP device cannot perform the channel interference scanning when sending the data, resulting in low interference detection efficiency. In addition, the data cannot be received or sent during channel interference scanning, resulting in poor data transmission performance.

**SUMMARY**

This application provides an interference detection method and device, to avoid an impact of Wi-Fi interference on performance of an AP device, thereby improving data transmission performance and user experience.

According to a first aspect, this application provides an interference detection method, where the method is applied to a wireless access point device, and the wireless access point device is connected to a plurality of station devices. The method includes: the wireless access point device first determines any one idle station device of the plurality of station devices connected to the wireless access point device; then the wireless access point device sends an interference detection indication message to the idle first station device, where the interference detection indication message includes a first channel identifier and a required first interference measurement factor, a to-be-detected channel identifier includes the first channel identifier, and the first interference measurement factor is an interference measurement factor of a first channel corresponding to the first channel identifier; and finally, the wireless access point device receives an interference detection result fed back by the first station device, where the interference detection result includes a value of the first interference measurement factor.

According to the foregoing technical solution, the wireless access point device may indicate an idle station device to perform interference detection on a channel, instead of performing interference detection on a channel by an AP device, so that an impact of Wi-Fi interference on performance of the wireless access point device can be avoided, thereby improving data transmission performance and user experience.

In a possible design, that the wireless access point device determines a first station device includes: the wireless access point device obtains traffic information of the plurality of station devices connected to the wireless access point device; and if traffic information of a station device is less than a specified threshold within specified duration, the wireless access point device determines that the station device is an idle station device, and uses any one station device of the idle station devices as the first station device.

According to the foregoing technical solution, the wireless access point device may determine, based on traffic information of a station device, whether the station device is an idle station device, to allocate a channel to the station device based on an idle degree of the station device, and perform interference detection on the channel.

In a possible design, the idle station device further includes: a second station device. The method further includes: the wireless access point device sends an interference detection indication message to the second station device, where the interference detection indication message includes a second channel identifier and a required second interference measurement factor, a to-be-detected channel identifier includes the second channel identifier, and the second interference measurement factor is an interference measurement factor of a second channel corresponding to the second channel identifier; and the wireless access point device receives an interference detection result fed back by the second station device, where the interference detection result includes a value of the second interference measurement factor.

According to the foregoing technical solution, when there are a plurality of idle station devices, the wireless access point device may send interference detection indication messages to the plurality of station devices. In this way, the plurality of station devices may perform interference detection on a channel indicated by the wireless access point device, thereby improving interference detection efficiency.

In a possible design, the method further includes: the wireless access point device determines a third station device, where the third station device is any one non-idle station device of the plurality of station devices connected to the wireless access point device, and traffic information of the third station device is greater than the specified threshold within the specified duration.

According to the foregoing technical solution, the wireless access point device may determine an idle station device and a busy station device from the plurality of station devices connected to the wireless access point device, then send an interference detection indication message to the idle station device, and does not send an interference detection indication message to the busy station device, to improve interference detection efficiency and user experience.

In a possible design, when it is detected that the traffic information of the third station device is less than the specified threshold within the specified duration and traffic information of the first station device is greater than the specified threshold within the specified duration, the method further includes: the wireless access point device does not send an interference detection indication message to the first station device, and the wireless access point device sends an interference detection indication message to the third station device, where the interference detection indication message includes a third channel identifier and a required third interference measurement factor, a to-be-detected channel identifier includes the third channel identifier, and the third interference measurement factor is an interference measurement factor of a third channel corresponding to the third channel identifier; and the wireless access point device receives an interference detection result fed back by the third station device, where the interference detection result includes a value of the third interference measurement factor.

According to the foregoing technical solution, the wireless access point device may determine, according to a real-time idle degree of a station device, a specific station device to which an interference detection indication message is sent, to avoid a problem that detection efficiency is reduced because idle degrees of the station device are different in different time.

In a possible design, a detection manner includes either of real-time detection and periodic detection.

According to the foregoing technical solution, the wireless access point device may detect traffic information of a station device in real time or periodically, to obtain an idle degree of the station device in time, to allocate a channel to the station device for detection.

In a possible design, the first interference measurement factor includes at least one of the following information: a channel identifier, a channel occupancy ratio, a quantity of co-channel neighboring wireless access point devices, a quantity of overlapped-channel neighboring wireless access point devices, a noise floor, channel power, a retransmission rate, average backoff duration, and a non-Wi-Fi interference ratio.

According to the foregoing technical solution, the wireless access point device may indicate an interference measurement factor required by a station device, so that the station device obtains the interference measurement factor based on information indicated by the station device, to subsequently determine an interference index and an interference type by using the interference measurement factor.

In a possible design, the method further includes: the wireless access point device identifies channel interference from the first channel based on the interference detection result, to obtain a channel interference index and an interference type of the first channel; and the wireless access point device determines an interference avoidance manner of the first channel based on the interference type of the first channel.

According to the foregoing technical solution, after completing channel interference detection, a station device may feed back an interference detection result to the wireless access point device, and then the wireless access point device may perform interference identification based on the interference detection result, to subsequently perform interference avoidance and improve user experience.

In a possible design, that the wireless access point device determines an interference avoidance manner of the first channel based on the interference type of the first channel includes:
when the interference type of the first channel is co-channel interference, the wireless access point device determines to switch the first channel to the second channel, where an interference index of the second channel is lower than the interference index of the first channel; and when the interference type of the first channel is adjacent-channel interference, the wireless access point device determines to reduce a first bandwidth of the first channel to a second bandwidth.

According to the foregoing technical solution, when the interference type is co-channel interference, the wireless access point device may switch a channel to a channel with a low interference index, to reduce an impact caused by interference. When the interference type is adjacent-channel interference, the wireless access point device reduces a bandwidth of the channel, to reduce interference.

According to a second aspect, this application provides an interference detection method, applied to a first station device, where the first station device is any one idle station device wireless access point device of a plurality of station devices connected to a wireless access point device. The method includes: the first station device receives an interference detection indication message sent by the wireless access point device, where the interference detection indication message includes a first channel identifier and a required first interference measurement factor, a to-be-detected channel identifier includes the first channel identifier, and the first interference measurement factor is an interference measurement factor of a first channel corresponding to the first channel identifier; and then the first station device performs channel interference detection based on the interference indication message, to obtain an interference detection result, and sends the interference detection result to the wireless access point device, where the interference detection result includes a value of the first interference measurement factor.

According to the foregoing technical solution, an idle station device performs steps of channel interference detection, so that an impact of Wi-Fi interference on performance of a wireless access point device can be avoided, thereby improving data transmission performance and user experience.

In a possible design, before the first station device receives an interference detection indication message sent by the wireless access point device, the method further includes: the first station device receives a notification message sent by the wireless access point device, where the notification message notifies that the first station device is an idle station device.

According to the foregoing technical solution, after determining idle degrees of the plurality of station devices connected to the wireless access point device, the wireless access point device may send a notification message to a station device, to notify that whether the station device is an idle station device.

In a possible design, the first station device is a station device whose traffic information determined by the wireless access point device is less than a specified threshold within specified duration.

According to the foregoing technical solution, the wireless access point device may determine, based on traffic information of a station device, whether the station device is idle, and after the station device is an idle station device, the idle station device is notified, to subsequently send an interference detection indication message to the idle station device.

In a possible design, the first interference measurement factor includes at least one of the following information: a channel identifier, a channel occupancy ratio, a quantity of co-channel neighboring wireless access point devices, a quantity of overlapped-channel neighboring wireless access point devices, a noise floor, channel power, a retransmission rate, average backoff duration, and a non-Wi-Fi interference ratio.

In a possible design, after the first station device receives an interference detection indication message sent by the wireless access point device, the method further includes: the first station device determines to execute the interference detection indication message sent by the wireless access point device.

According to the foregoing technical solution, an idle station device may determine, based on a capability of the idle station device, whether to execute the interference detection indication message sent by the wireless access point device. If the station device agrees to execute the interference detection indication message sent by the wireless access point device, channel interference detection is performed, and an interference detection result is fed back to the wireless access point device.

In a possible design, the method further includes: the first station device sends a feedback message for rejecting performing interference detection to the wireless access point device, to enable the wireless access point device to send the interference detection indication message to a second station device.

According to the foregoing technical solution, if a station device rejects executing the interference detection indication message sent by the wireless access point device, the station device may send a feedback message to the wireless access point device, so that the wireless access point device can reallocate, to a channel, a station device that performs channel detection, thereby improving channel detection efficiency.

According to a third aspect, this application further provides a wireless access point device. The wireless access point device includes one or more processors, one or more memories, and one or more computer programs, where the one or more computer programs are stored in the one or more memories, the one or more computer programs include instructions, and when the instructions are invoked and executed by the one or more processors, the wireless access point device is enabled to perform the implementations of the first aspect or any one of the possible implementations of the first aspect. For example, when the instructions are invoked and executed by the one or more processors, the wireless access point device is enabled to perform the following steps: determining a first station device, where the first station device is any one idle station device of a plurality of station devices connected to the wireless access point device; sending an interference detection indication message to the first station device, where the interference detection indication message includes a first channel identifier and a required first interference measurement factor, a to-be-detected channel identifier includes the first channel identifier, and the first interference measurement factor is an interference measurement factor of a first channel corresponding to the first channel identifier; and receiving an interference detection result fed back by the first station device, where the interference detection result includes a value of the first interference measurement factor.

According to a fourth aspect, this application further provides a first station device. The first station device includes one or more processors, one or more memories, and one or more computer programs, where the one or more computer programs are stored in the one or more memories, the one or more computer programs include instructions, and when the instructions are invoked and executed by the one or more processors, the first station device is enabled to perform the implementations of the second aspect or any one of the possible implementations of the second aspect. For example, when the instructions are invoked and executed by the one or more processors, the first station device is enabled to perform the following steps: receiving an interference detection indication message sent by a wireless access point device, where the interference detection indication message includes a first channel identifier and a required first interference measurement factor, a to-be-detected channel identifier includes the first channel identifier, and the first interference measurement factor is an interference measurement factor of a first channel corresponding to the first channel identifier; performing channel interference detection based on the interference detection indication message received by a receiving unit, to obtain an interference detection result; and sending the interference detection result to the wireless access point device, where the interference detection result includes a value of the first interference measurement factor.

According to a fifth aspect, this application further provides an interference detection apparatus. The apparatus includes modules/units for performing the method in the first aspect or the method in any one of the possible designs of the first aspect. The modules/units may be implemented by hardware, or may be implemented by executing corresponding software by hardware.

According to a sixth aspect, this application further provides an interference detection apparatus. The apparatus includes modules/units for performing the method in the second aspect or the method in any one of the possible designs of the second aspect. The modules/units may be implemented by hardware, or may be implemented by executing corresponding software by hardware.

According to a seventh aspect, an embodiment of this application provides an interference detection apparatus. The apparatus includes a memory, a transceiver, and a processor. The transceiver is configured to receive and send a signal. The processor is configured to support the apparatus in performing corresponding functions in the first aspect or corresponding functions in any one of the possible implementations of the first aspect. The memory is coupled to the processor, and stores program instructions and data that are necessary for the apparatus.

According to an eighth aspect, an embodiment of this application provides an interference detection apparatus. The apparatus includes a memory, a transceiver, and a processor. The transceiver is configured to receive and send a signal. The processor is configured to support the apparatus in performing corresponding functions in the second aspect or corresponding functions in any one of the possible implementations of the second aspect. The memory is coupled to the processor, and stores program instructions and data that are necessary for the apparatus.

According to a ninth aspect, this application further provides a computer-readable storage medium. The computer-readable storage medium stores instructions, and when the instructions are run on a computer, the computer is enabled to perform the method in the first aspect and the method in any one of the possible designs of the first aspect.

According to a tenth aspect, this application further provides a computer-readable storage medium. The computer-readable storage medium stores instructions, and when the instructions are run on a computer, the computer is enabled to perform the method in the second aspect and the method in any one of the possible designs of the second aspect.

According to an eleventh aspect, this application further provides a computer program product. When the computer program product is run on a wireless access point device, the wireless access point device is enabled to perform the method in the first aspect and the method in any one of the possible designs of the first aspect.

According to a twelfth aspect, this application further provides a computer program product. When the computer program product is run on a station device, the station device is enabled to perform the method in the second aspect and the method in any one of the possible designs of the second aspect.

For the aspects from the third aspect to the twelfth aspect and technical effects that may be achieved in the aspects, refer to descriptions of technical effects that may be achieved in the possible solutions of the first aspect. Details are not described herein again.

**BRIEF DESCRIPTION OF DRAWINGS**

FIG. 1 is a schematic diagram of an application scenario according to an embodiment of this application;
FIG. 2 is a schematic diagram of software modules according to an embodiment of this application;
FIG. 3 is a flowchart of an interference detection method according to an embodiment of this application;

FIG. 4 is a schematic diagram of clear channel assessment according to an embodiment of this application;

FIG. 5 is a flowchart of an interference identification method according to an embodiment of this application;

FIG. 6 is a flowchart of an interference avoidance method according to an embodiment of this application;

FIG. 7A and FIG. 7B are flowcharts of another method for interference detection, interference identification, and interference avoidance according to an embodiment of this application;

FIG. 8(a) to FIG. 8(c) are schematic diagrams of interference detection results according to an embodiment of this application;

FIG. 9 is a schematic block diagram of an interference detection apparatus according to an embodiment of this application;

FIG. 10 is a schematic block diagram of another interference detection apparatus according to an embodiment of this application; and

FIG. 11 is a schematic diagram of a structure of an interference detection apparatus according to an embodiment of this application.

## DESCRIPTION OF EMBODIMENTS

The technical solutions in embodiments of this application are described in detail below with reference to the accompanying drawings of the following embodiments of this application.

It should be understood that, in the following embodiments, "at least one" means one or more, and "a plurality of means two or more. In addition, it should be understood that in the description of this application, terms such as "first" and "second" are merely used for distinguishing and description.

First, concepts related to embodiments of this application are explained and described.

(1) Wireless access point (AP) device: The wireless access point device is a wireless switch used in a wireless network and is also a core of the wireless network. The wireless AP device is an access point for a mobile computer user to access a wired network, is mainly used in a broadband home, inside a building, and inside a campus, and may cover dozens of meters to hundreds of meters. The wireless AP device (also referred to as a session point or an access bridge) is a general name of a wireless router (including a wireless gateway and a wireless bridge).

(2) STA (station) device: The STA device is generally a client in a wireless local area network (wireless local area network, WLAN), and may be a computer with a wireless network interface card or a smartphone with a Wi-Fi module. The STA device may be mobile or fixed, and is a most essential unit of the WLAN.

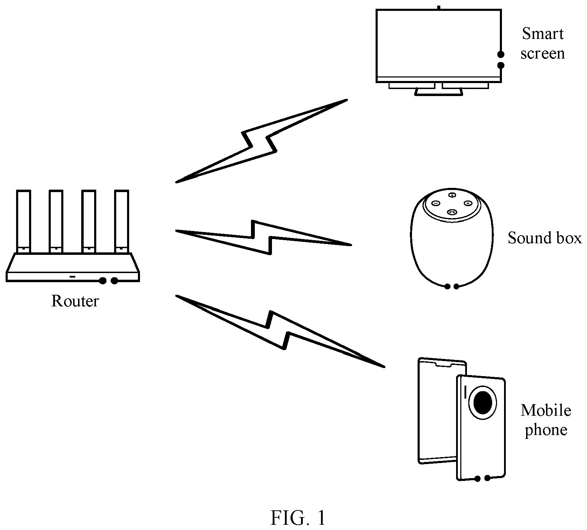

An application scenario in embodiments of this application is described first. Refer to FIG. 1.

The application scenario may include an AP device (for example, a router shown in the figure) and at least one STA device (for example, a smart screen, a sound box, or a mobile phone shown in the figure). The AP device and the STA device may be interconnected by using a communication network. For example, the communication network may be a local area network, for example, a wireless fidelity (wireless fidelity, Wi-Fi) hotspot network. The at least one STA device may be connected to a same AP device by using the communication network. It should be understood that, in FIG. 1, only three STA devices are used as an example for description. A quantity of STA devices is not specifically limited in this embodiment of this application.

In some embodiments of this application, an AP device may detect a busy degree of at least one STA device, and then indicate an idle STA device to perform signal interference detection. Correspondingly, a STA device may perform signal interference detection on a channel, and send a detection result to the AP device after completing the signal interference detection.

In some other embodiments, the AP device may determine whether a current operating channel is optimal. If the current operating channel is not an optimal channel, the AP device switches the current operating channel to an optimal channel based on the detection result sent by the STA device, or performs frequency reduction processing on the current operating channel to avoid interference.

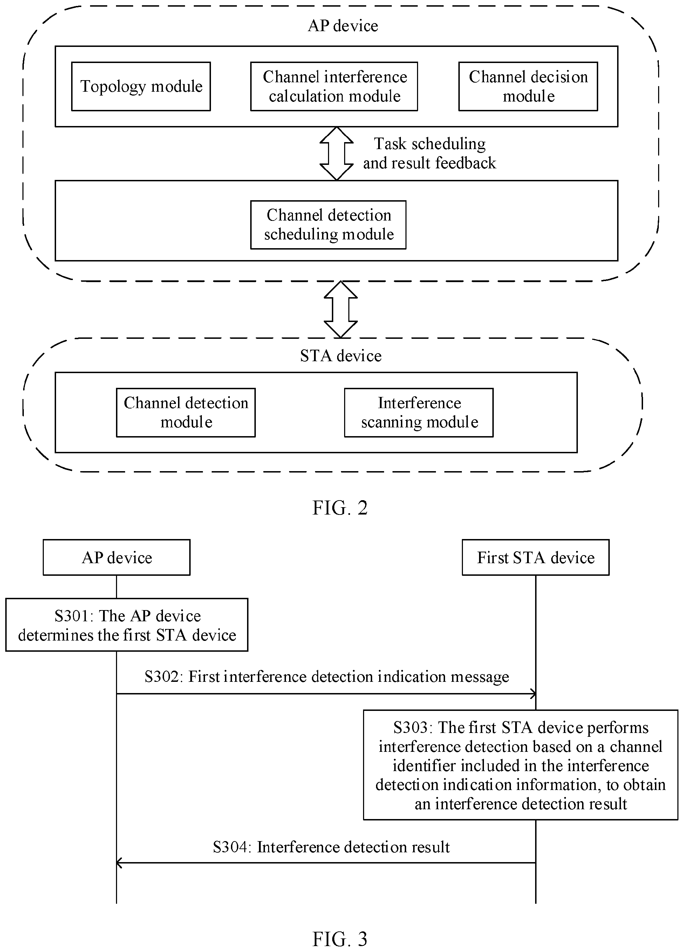

FIG. 2 is a schematic diagram of software modules according to an embodiment of this application. As shown in FIG. 2, an AP device side may include a topology module, a channel interference calculation module, a channel decision module, and a channel detection scheduling module, and a STA device side may include a channel detection module and an interference scanning module.

The topology module is configured to obtain a topology structure of a network (for example, a home network), and identify an idle degree of a STA device connected to a current AP device. The channel interference calculation module is configured to calculate an interference type and an interference index of each channel based on an interference measurement factor. The channel decision module is configured to determine an interference avoidance manner based on the interference type and the interference index of an operating channel, for example, a current operating channel is reduced to a specific band, or a current channel is switched to an optimal channel. The channel detection scheduling module is configured to interact with the STA device, and send an interference detection indication message to an identified idle STA device, so that the idle STA device detects an interference measurement factor of a channel.

The channel detection module is configured to interact with the AP device, drive, based on a requirement of the AP device, the interference scanning module to complete collection of the interference measurement factor of the channel, and feed back a result to the AP device. The interference scanning module is configured to invoke, based on an interference detection requirement, a Wi-Fi driver to complete channel interference scanning and obtain an interference factor.

FIG. 3 is a flowchart of an interference detection method according to an embodiment of this application. As shown in FIG. 3, the method may include the following steps.

S301: An AP device determines a first STA device.

In this embodiment of this application, the AP device may obtain traffic of at least one STA device connected to the AP device, and then determine, based on traffic of each STA device, whether the STA device is idle. For example, when traffic of a STA device is less than a specified threshold within specified duration (for example, one hour), for example, one kilobit per second (kilobit per second, Kbps), it may be considered that the STA device is an idle STA device. Certainly, the specified threshold may alternatively be another value. This is not limited in this application. For ease of description, any one of idle STA devices may be denoted as a "first STA device". It should be understood that there may be one or more idle STA devices (for example, denoted as a "first STA device" and a "second STA device"). This is not specifically limited in this application.

In some embodiments, the AP device may further determine a non-idle STA device. For example, the AP device may determine a third STA device, where the third STA device may be any one non-idle STA device of a plurality of STA devices connected to the AP device, and traffic information of the third STA device is greater than the specified threshold within the specified duration.

Optionally, the AP device may also obtain a Wi-Fi capability of the STA device. To be specific, the Wi-Fi capability of the STA device supports 2.4G or 5G, to allocate a to-be-detected task to the STA device based on the Wi-Fi capability of the STA device. For example, assuming that there are three STA devices, for example, a STA device 1, a STA device 2, and a STA device 3, and assuming that Wi-Fi capabilities of the STA device 1 and the STA device 2 support 2.4G, and a Wi-Fi capability of the STA device 3 supports 5G, detection tasks supporting 2.4G may be allocated to the STA device 1 and the STA device 2, and a detection task supporting 5G may be allocated to the STA device 3.

In some embodiments, before S301 is performed, the AP device may trigger a channel optimization instruction, and then obtain traffic of the STA device connected to the AP device, to determine the first STA device. The AP device may trigger the channel optimization instruction in the following manner:

Manner 1: The AP device periodically triggers the channel optimization instruction.

The AP device may set time for performing channel optimization. For example, a channel may be optimized at a fixed time interval, that is, periodically. For example, the AP device may trigger the channel optimization instruction once every two minutes.

Manner 2: When it is detected that a network is poor and channel switching is needed, a user manually triggers the channel optimization instruction.

For manner 2, when the network is poor, the user may clearly perceive network freezing when using the network. In this case, the user may log on the AP device by using an account and a password, and then manually trigger the channel optimization instruction. For example, when using a mobile phone, the user feels that a network speed is slow. In this case, the user may log on an application of a router, and then tap a "performance optimization" button on an application interface of the router, to trigger the channel optimization instruction. It should be understood that the foregoing manners are merely examples for description. This is not limited in this application.

S302: The AP device sends an interference detection indication message to the first STA device.

Optionally, after determining an idle STA device, the AP device may send a notification message to the STA device connected to the AP device, to notify that whether the STA device is the idle STA device. Certainly, the AP device may alternatively send the notification message only to the idle STA device. This is not limited in this application.

The interference detection indication message may include a channel identifier, a STA device identifier, and an interference measurement factor that needs to be returned. It should be understood that there may be at least one channel identifier, the channel identifier is a channel identifier on which interference detection is to be performed, and the STA device identifier is an identifier corresponding to a STA device that performs the interference detection.

The interference measurement factor may include at least one of the following information: a channel identifier, a channel occupancy ratio, a quantity of co-channel neighboring AP devices, a quantity of overlapped-channel neighboring AP devices, a noise floor, a retransmission rate, average backoff duration, channel power, and a non-Wi-Fi interference ratio (namely, a non-Wi-Fi interference busy degree below). The following describes the interference measurement factors:

1. Non-Wi-Fi interference ratio

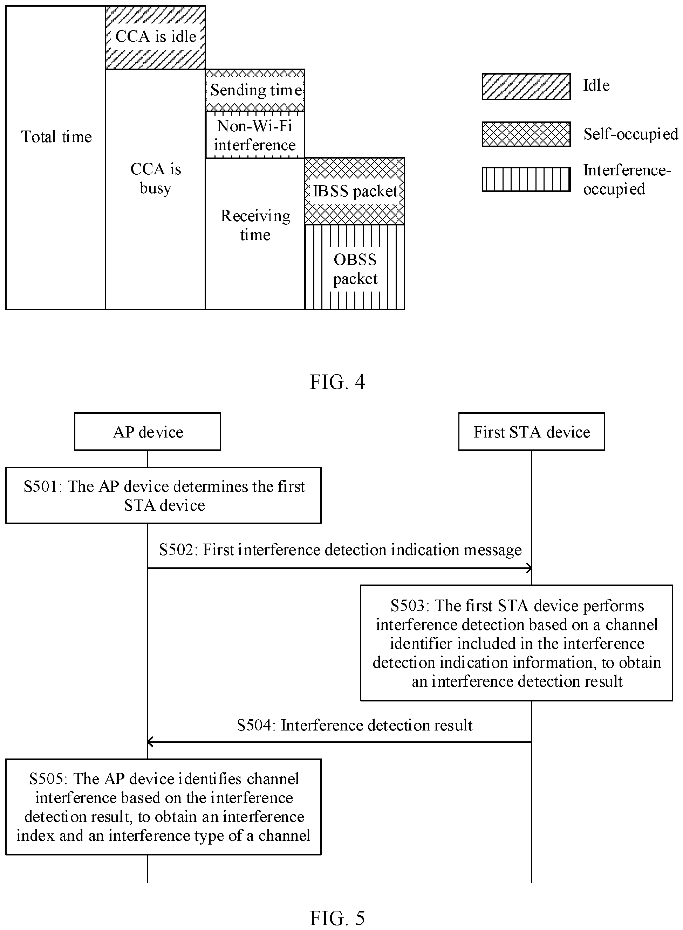

FIG. 4 is a schematic diagram of clear channel assessment according to an embodiment of this application. Refer to FIG. 4. FIG. 4 may include total time, clear channel assessment (clear channel assessment, CCA) busy time, CCA idle time, an independent basic service set (independent basic service set, IBSS) packet, an overlapping basic service set (overlapping basic service set, OBSS) packet, and the like.

Total busy degree = CCA busy time/Total time. Interference busy degree = (Non-Wi-Fi interference time + OBSS packet receiving time)/Total time. Non-Wi-Fi interference busy degree = Non-Wi-Fi interference time/Total time.

2. Noise floor: The noise floor is white Gaussian noise received by a chip, and may be understood as irregular and unrecognized noise generated by another band.

3. Retransmission rate: The retransmission rate is total times of software and hardware retransmission divided by total times of sending a packet over an air interface when the packet fails to be sent once over the air interface in one statistics period (for example, 1s)

4. Average backoff duration: The average backoff duration is average competition duration in one statistics period (for example, 1s) when a packet performs air interface enhanced distributed channel access (enhanced distributed channel access, EDCA) competition.

5. Quantity of co-channel neighboring AP devices: The quantity of co-channel neighboring AP devices is a quantity of co-channel neighboring AP devices whose signal strength is greater than a CCA threshold. An air interface competition relationship is formed between the co-channel neighboring AP devices.

6. Quantity of overlapped-channel neighboring AP devices: A range of overlapped channels is determined by a range of a bandwidth and up-down offset. An overlapped-channel neighboring AP device with strong signal strength causes both Wi-Fi interference and non-Wi-Fi interference. An overlapped-channel neighboring AP device with weak signal strength has a smaller impact.

In some embodiments, when there is one first STA device, the AP device may send an interference detection indication message to the unique STA device. In other words, the AP device may indicate the unique STA device to perform interference detection on at least one channel.

In some other embodiments, when there are a plurality of first STA devices, the AP device may send interference detection indication messages to the plurality of STA devices. For example, the AP device sends the interference detection indication messages to the first STA device and the second STA device. The interference detection indication message sent to the first STA device includes a first channel identifier and a required first interference measurement factor, and the first interference measurement factor is an interference measurement factor of a first channel corresponding to the first channel identifier. The interference detection indication message sent to the second STA device includes a second channel identifier and a required second interference measurement factor, and the second interference measurement factor is an interference measurement factor of a second channel corresponding to the second channel identifier. In other words, the AP device may indicate the plurality of STA devices to perform interference detection on the at least one channel. To be specific, the AP device may allocate, to the STA device, a corresponding channel on which interference detection is performed. For example, assuming that the first STA device includes two STA devices: a STA device 1 and a STA device 2, the AP device may indicate the STA device 1 to be responsible for interference detection on a channel 1 and a channel 2, and indicate the STA device 2 to be responsible for interference detection on a channel 3 to a channel 5. Certainly, the AP device may alternatively indicate the STA device 1 to be responsible for interference detection on the channel 1, indicate the STA device 2 to be responsible for interference detection on the channel 2 to the channel 5, and the like. This is not specifically limited in this application.

After an idle STA device identifier is obtained, a to-be-detected channel identifier may be selected, and then a corresponding to-be-detected channel is allocated to the idle STA device. In a possible implementation, the to-be-detected channel may be selected based on a channel priority. For example, if priorities of the channel 1, a channel 6, and a channel 11 are higher than a priority of another channel, and the channel 1, the channel 6, and the channel 11 may be used as to-be-detected channels. Certainly, the AP device may further allocate, based on the foregoing priorities, the STA device to preferentially detect a channel with a high priority, and then allocate, after detecting the channel with the high priority, the STA device to detect a channel with a low priority. Alternatively, the AP device may use all channels as to-be-detected channels, to be specific, perform full-channel detection. Alternatively, the AP device may select, based on an actual requirement, some channels as to-be-detected channels. This is not limited in this application.

It should be understood that selecting of the to-be-detected channel identifier is not limited to being performed after the idle STA device identifier is obtained. For example, the to-be-detected channel identifier may be selected while the idle STA device identifier is obtained, or the to-be-detected channel identifier may be selected before the idle STA device identifier is obtained. This is not specifically limited herein.

Further, the AP device may include, in the interference detection indication message, an interference measurement factor that needs to be fed back, so that the STA device may feed back a required interference measurement factor to the AP device. In addition, when sending interference detection indication messages to different STA devices, the AP device may carry a same interference measurement factor. For example, the AP device sends interference detection indication messages to the STA device 1 and the STA device 2. The interference detection indication messages indicate the STA device 1 to detect the channel 1, indicate the STA device 2 to detect the channel 2 and the channel 3, and indicate that required interference measurement factors include an interference busy degree, a retransmission rate, and a channel occupancy ratio.

In some embodiments, if a channel identifier included in the interference detection indication message is a channel identifier of a current operating channel (or the interference detection indication message indicates that interference detection is performed on the current operating channel), obtained interference measurement factors may include at least the interference busy degree and the retransmission rate. If channel identifiers included in the interference detection indication message are identifiers of all channels (or the interference detection indication message indicates the full-channel detection), obtained interference measurement factors may include at least the interference busy degree and a quantity of neighboring AP devices. When the interference detection indication message indicates to perform interference detection on the current operating channel, values of the interference measurement factors may be obtained periodically (for example, every two seconds), or may be obtained for a plurality of times, to obtain an average value. For example, a time for performing single channel interference detection may be set to 15 milliseconds, then detection is performed 10 times per second, and finally an average value of values of the interference measurement factors detected within 1 second is obtained. When the interference detection indication message indicates to perform interference detection on all channels (or denoted as full-channel scanning), the interference detection may be distinguished by using a dynamic frequency selection (dynamic frequency selection, DFS) channel. For example, a non-DFS channel uses an active scanning manner, and detection duration may be 15 milliseconds. A DFS channel uses a passive scanning manner, and detection duration may be 110 milliseconds.

It should be noted that there is no direct association relationship between a quantity of channel identifiers included in the interference detection indication message and content included in the interference measurement factor. For example, when the interference detection indication message indicates to perform interference detection on the current operating channel, the interference measurement factors may also include the quantity of neighboring AP devices, the channel occupancy ratio, and the like. This is not limited in this application.

S303: The first STA device performs interference detection based on the channel identifier included in the interference detection indication message, to obtain an interference detection result.

The interference detection result may include a value corresponding to an interference measurement factor of each channel.

When the AP device sends the interference detection indication message to the STA device, the interference detection indication message includes the required interference measurement factor. Therefore, the STA device only needs to obtain the interference measurement factor required by the AP device. Because different STA devices may indicate different chip capabilities, interference measurement factors that can be obtained may be different. For example, assuming that idle STA devices include a STA device 1, a STA device 2, and a STA device 3, and interference measurement factors included in interference detection indication messages sent by the AP device to the three STA devices are a parameter 1, a parameter 2, and a parameter 3. After receiving the interference detection indication messages, the three STA devices may obtain parameters required by the AP device. For example, the STA device 1 may obtain the parameter 1, the parameter 2, and the parameter 3; the STA device 2 may obtain the parameter 2 and the parameter 3, but cannot obtain the parameter 1; and the STA device 3 may obtain the parameter 1 and the parameter 2, but cannot obtain the parameter 3. Certainly, the foregoing is merely an example. In actual application, the STA device may alternatively obtain all parameters, or may not obtain the parameter required by the AP device. This is not limited in this application. It should be understood that the parameter 1, the parameter 2, and the parameter 3 are the interference measurement factors described above.

S304: The first STA device sends the interference detection result to the AP device.

In some embodiments, after performing interference detection on the channel, the first STA device may feed back the interference detection result to the AP device, so that the AP device performs interference identification based on the interference detection result.

When there are a plurality of idle STA devices, the plurality of STA devices may feed back interference detection results to the AP device. For example, the first STA device and the second STA device are idle STA devices. The AP device may receive an interference detection result fed back by the first STA device and an interference detection result fed back by the second STA device. The interference detection result fed back by the first STA device includes a value of a first interference measurement factor, and the interference detection result fed back by the second STA device includes a value of a second interference measurement factor.

Further, in actual application, the idle STA device may change. For example, the first STA device is idle in a first time, and the STA device may be busy in a second time. Therefore, in this embodiment of this application, if it is detected that the traffic information of the third STA device is less than the specified threshold within the specified duration and traffic information of the first STA device is greater than the specified threshold within the specified duration, to be specific, after first preset duration, the first STA device changes from idle to busy, and the third STA device changes from busy to idle, the AP device may send an interference detection indication message to the third STA device, instead of sending the interference detection indication message to the first STA device, to perform interference detection based on an actual condition of each node in a network. In this way, interference detection efficiency can be improved, and user experience can also be improved. It should be noted that traffic information of a STA device may be detected periodically or in real time.

The interference detection indication message sent to the third STA device may include a third channel identifier and a required third interference measurement factor, and the third interference measurement factor is an interference measurement factor of a third channel corresponding to the third channel identifier. It should be understood that channel identifiers detected in different times may be the same or may be different. This is not limited in this application.

According to the foregoing method, channel interference detection may be implemented.

Compared with a method of performing interference detection by an AP device in a conventional technology, in this embodiment of this application, interference detection may be performed by using an idle STA device, to avoid an impact of Wi-Fi interference on performance of the AP device, thereby improving user experience.

FIG. 5 is a flowchart of an interference identification method according to an embodiment of this application. As shown in FIG. 5, the method may include the following steps.

S501: An AP device determines a first STA device.

S502: The AP device sends an interference detection indication message to the first STA device.

S503: The first STA device performs interference detection based on a channel identifier included in the interference detection indication message, to obtain an interference detection result.

S504: The first STA device sends the interference detection result to the AP device.

S505: The AP device identifies channel interference based on the interference detection result, to obtain an interference index and an interference type of a channel.

In some embodiments, the interference detection result may include values of interference measurement factors of all channels on which channel detection is performed, and the AP device may obtain an interference index and an interference type of each channel through calculation based on the values of the interference measurement factors. For example, assuming that there are three channel identifiers included in the interference detection indication message, for example, a channel 1, a channel 2, and a channel 3, then the first STA device may perform interference detection on the channel 1, the channel 2, and the channel 3, to obtain values corresponding to interference measurement factors of the three channels, to be specific, obtain interference detection results of the three channels, and then the interference detection results of the three channels are sent to the AP device. After receiving the interference detection results of the three channels, the AP device may calculate interference indexes and interference types of the three channels by using an interference index algorithm.

The following describes a calculation process using the interference index algorithm. First, a communication signal (including a primary channel identifier, a channel bandwidth, a noise floor, a retransmission rate, CCA, average avoidance duration, and the like) and an interference signal (including an interference channel identifier, a channel bandwidth corresponding to a co-channel neighboring AP device, a channel bandwidth corresponding to an overlapping neighboring AP device, a received signal strength indicator (received signal strength indicator, RSSI), and the like) of a channel are obtained, and then a relationship between the communication signal and the interference signal is compared. If the communication signal includes the interference signal, the interference signal is added to a background set. If the interference signal includes the communication signal, the interference signal is added to a competition set. Then, exponential fitting is performed on a background set and a competition set of each channel. A higher index indicates greater interference.

Values of parameters included in the communication signal and the interference signal may be average values or square differences measured for a plurality of times, to reduce a measurement error.

Optionally, after an interference index is obtained, a score of each channel may be further obtained based on the interference index and a load status of the channel. In addition, scores may be sorted to obtain a channel with a highest score, and the channel with the highest score may be used as a subsequently recommended channel.

It should be understood that, a difference between the embodiment shown in FIG. 3 and the embodiment shown in FIG. 5 lies only in that, on the basis of the embodiment shown in FIG. 3, in FIG. 5, a step of interference identification in S505 is added. For specific implementations of S501 to S504, refer to detailed descriptions of the embodiment shown in FIG. 3. Details are not described herein again.

According to the foregoing method, channel interference may be identified based on a same interference measurement factor and interference index algorithm, to avoid different identified channel interference caused by different interference measurement factors and interference index algorithms calculated by different STA devices or AP devices. Therefore, accuracy of channel interference identification can be improved.

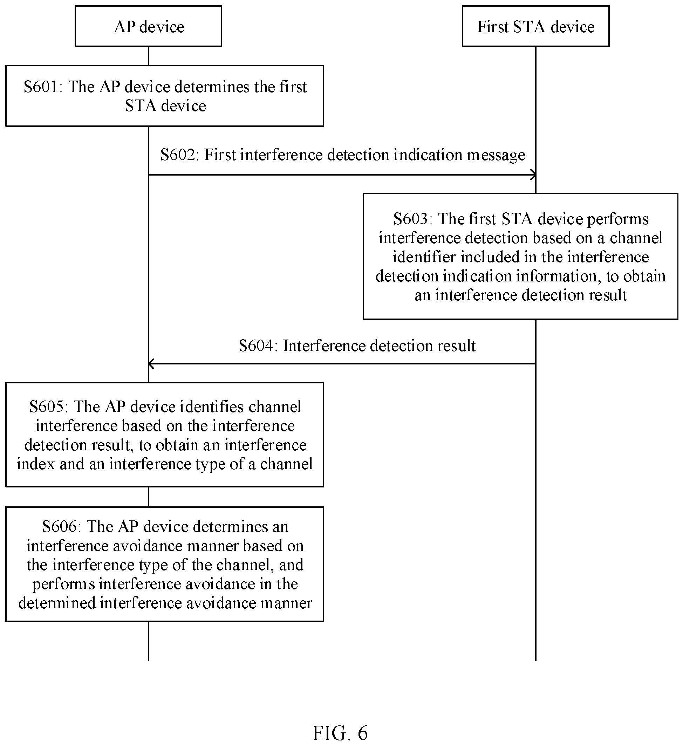

In this embodiment of this application, after obtaining the interference index and the interference type of the channel, the AP device may avoid channel interference, to reduce an impact caused by the channel interference, thereby improving user experience. For example, FIG. 6 is a flowchart of an interference avoidance method according to an embodiment of this application. As shown in FIG. 6, the method may include the following steps.

S601: An AP device determines a first STA device.

S602: The AP device sends an interference detection indication message to the first STA device.

S603: The first STA device performs interference detection based on a channel identifier included in the interference detection indication message, to obtain an interference detection result.

S604: The first STA device sends the interference detection result to the AP device.

S605: The AP device identifies channel interference based on the interference detection result, to obtain an interference index and an interference type of a channel.

S606: The AP device determines an interference avoidance manner based on the interference type of the channel, and performs interference avoidance in the determined interference avoidance manner.

Optionally, before S606 is performed, the AP device may sort interference indexes of channels obtained in S605, so that a channel with a lowest interference index may be obtained based on the sorted interference indexes, to be specific, a channel with optimal channel quality is obtained.

In some embodiments, if an interference type of a current channel is co-channel interference, the AP device switches the current channel to the channel with the lowest interference index. Specifically, if the interference type of the current channel is the co-channel interference, the AP device may sort the interference indexes of the channels in the interference detection result, then select the channel with the lowest interference index, and switch the current channel to the channel with the lowest interference index. For example, assuming that the current channel is a channel 1, and an interference type of the channel 1 is co-channel interference, the AP device may sort interference indexes of the channel 1, a channel 2, and a channel 3. For example, an interference index of the channel 1 > an interference index of the channel 2 > an interference index of the channel 3. To be specific, the interference index of the channel 3 is the lowest, and the channel 1 is switched to the channel 3 for data transmission. Certainly, if the interference index of the current channel is the lowest, to be specific, the current channel is an optimal channel, the current channel is not switched.

In some other embodiments, if the interference type of the current channel is adjacent-channel interference, it is determined whether the interference index of the current channel is the lowest. If the interference index of the current channel is not the lowest, the current channel may be switched to a channel with a smaller interference index. If the interference index of the current channel is the lowest, a bandwidth of the current channel may be reduced to avoid interference. For example, the channel 1, the channel 2, and the channel 3 are still used as an example. Assuming that the current channel is the channel 2, and an interference type of the channel 2 is adjacent-channel interference, a value relationship between channel interference indexes of the three channels is, for example, the interference index of the channel 1 > the interference index of the channel 2 > the interference index of channel 3. In this case, the interference index of channel 2 is not the lowest, to be specific, the channel 2 is not an optimal channel. The AP device may switch the channel 2 to a channel with a lowest interference index, that is, the channel 3.

For another example, if the interference type of the current channel (for example, the channel 2) is adjacent-channel interference. Assuming that a value relationship between channel interference indexes of the three channels is: the interference index of the channel 1 > the interference index of the channel 3 > the interference index of the channel 2, the interference index of the channel 2 is the lowest, and the AP device may reduce a bandwidth of the channel 2. For example, the bandwidth occupied by the channel 2 is 40 Hz (hertz) to 48 Hz. If the channel 2 is an optimal channel, the bandwidth of the channel 2 may be reduced, for example, reduced to 40 Hz to 44 Hz, and data is transmitted by using the bandwidth of 40 Hz to 44 Hz.

It should be noted that S601 to S604 in the embodiment shown in FIG. 6 are the same as S301 to S304 in the embodiment shown in FIG. 3 and S501 to S504 in the embodiment shown in FIG. 5, and S605 in the embodiment shown in FIG. 6 is the same as S505 in the embodiment shown in FIG. 5. For details, refer to the detailed descriptions of embodiments shown in FIG. 3 and FIG. 5. Details are not described herein again.

According to the foregoing method, interference detection, interference identification, and interference avoidance on a channel may be implemented. Channel detection is completed by using an idle STA device, then an interference index and an interference type of the channel are calculated by using a same interference index algorithm, and then an interference avoidance manner of the channel is determined based on the interference index and the interference type. Therefore, a problem that data transmission cannot be performed when an AP device performs channel detection, to affect performance of the AP device is avoided, and accuracy of channel identification and feasibility of interference avoidance are improved.

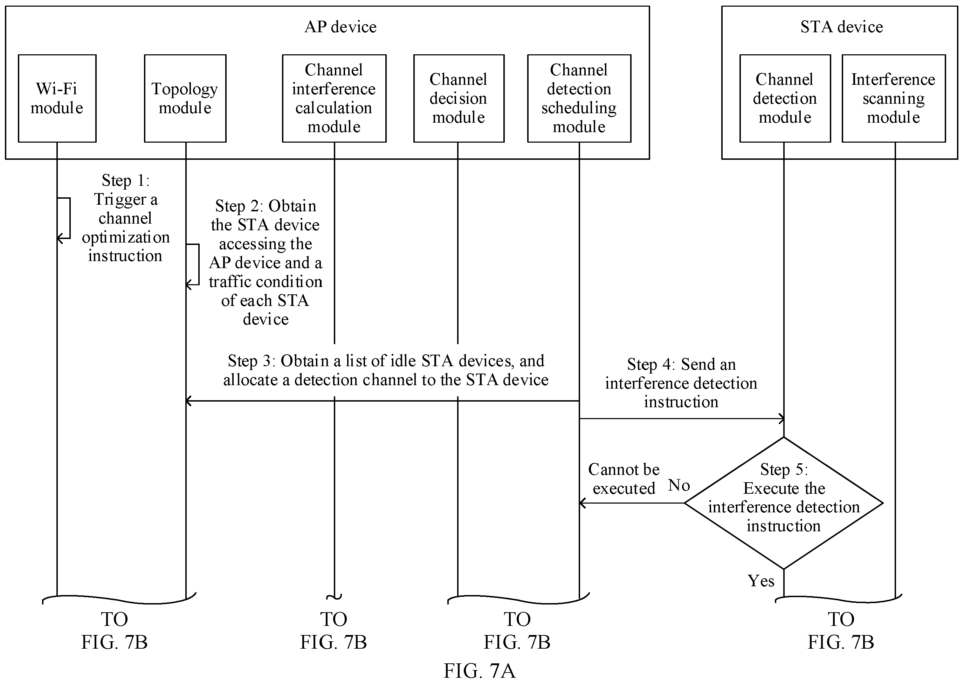

Further, based on the foregoing embodiment, this application further provides a procedure of a method for interference detection, interference identification, and interference avoidance. Details are shown in FIG. 7A and FIG.

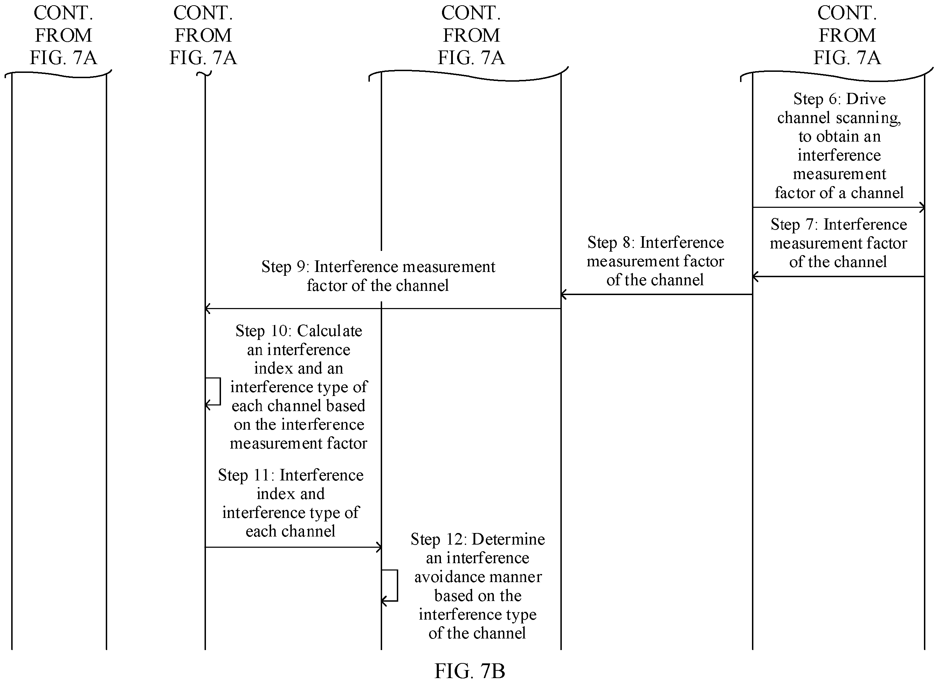

7B. It should be noted that in the embodiment shown in FIG. 7A and FIG. 7B, one idle STA device is used as an example for description. In this application, a total quantity of STA devices (for example, N STA devices, where N is a positive integer) and a quantity of idle STA devices are not limited.

As shown in FIG. 7A and FIG. 7B, the method may include the following steps.

Step 1: A Wi-Fi module of an AP device triggers a channel optimization instruction.

In this embodiment of this application, the AP device may trigger the channel optimization instruction regular time, or a user manually triggers the channel optimization instruction, to minimize channel interference. For example, the AP device may periodically send the channel optimization instruction, or when the user perceives network freezing, the user manually triggers the channel optimization instruction.

Step 2: A topology module of the AP device obtains a STA device accessing the AP device and a traffic condition of each STA device.

Step 3: A channel detection scheduling module of the AP device obtains a list of idle STA devices from the topology module, and allocates a to-be-detected channel to the STA device.

The to-be-detected channel may be a channel selected based on a channel priority. Certainly, all channels may be selected as to-be-detected channels. This is not limited in this application.

In a possible implementation, when hourly traffic of a STA device is less than a specified threshold, for example, 1 Kbps, it may be considered that the STA device is an idle STA device. When one AP device is connected to a plurality of STA devices, at least one STA device may be an idle STA device. In this case, the channel detection scheduling module of the AP device may allocate a to-be-detected channel to the idle STA device. For example, assuming that detection channels include a channel 1, a channel 2, and a channel 3, a STA device 1 may be allocated to detect the channel 1 and the channel 2, and a STA device 2 may be allocated to detect the channel 3. Alternatively, a STA device 1 may be allocated to detect the channel 1, and a STA device 2 may be allocated to detect the channel 2 and the channel 3, and the like.

Step 4: The channel detection scheduling module of the AP device sends an interference detection instruction to a channel detection module of the STA device.

The interference detection instruction may carry a to-be-detected channel identifier (or referred to as a channel number) and an interference measurement factor that needs to be returned.

Step 5: The channel detection module of the STA device determines whether to execute the interference detection instruction. If the channel detection module of the STA device cannot execute the interference detection instruction, a message that the channel detection module of the STA device cannot execute the interference detection instruction is fed back to the channel detection scheduling module of the AP device, so that the AP device reallocates the STA device. If the STA device can execute the interference detection instruction, step 6 continues to be performed.

In a possible implementation, the STA device may determine, based on a current operating status of the STA device, for example, a busy degree or a power status, whether the STA device executes the interference detection instruction. If the STA device rejects executing the interference detection instruction sent by the AP device, the STA device notifies the AP device. If the STA device agrees to execute the interference detection instruction sent by the AP device, the STA device continues to perform the following steps, or when the STA device agrees to execute the interference detection instruction sent by the AP device, the STA device may feed back, to the AP device, a message that the STA device agrees to execute the instruction.

In a possible implementation, a first timer may be set in step 5, and the first timer is configured to detect whether the STA device agrees to execute the interference detection instruction. When the AP device receives, before the first timer expires, the message that is fed back by the STA device and that is for rejecting executing the interference detection instruction, the AP device may reallocate the STA device; or when the AP device does not receive, after the first timer expires, the message that is fed back by the STA device and that is for rejecting executing the interference detection instruction, the AP device may reallocate the STA device.

Step 6: The channel detection module of the STA device drives an interference scanning module of the STA device to perform channel scanning, to obtain an interference measurement factor of a channel.

In this embodiment of this application, the STA device may obtain a corresponding interference measurement factor based on the interference measurement factor that needs to be returned and that is carried in the interference detection instruction in step 4. It should be understood that, for parameters included in the interference measurement factor, refer to the descriptions in the embodiment shown in FIG. 3. Details are not described herein again.

Step 7: The interference scanning module of the STA device feeds back the interference measurement factor of the channel to the channel detection module of the STA device.

Step 8: The channel detection module of the STA device feeds back the interference measurement factor of the channel to the channel detection scheduling module of the AP device.

After obtaining the interference measurement factor of the channel, the STA device may feed back the interference measurement factor of the channel to the AP device, so that the AP device can perform interference identification based on the interference measurement factor. Because detection tasks allocated by the AP device to different STA devices may be different, time required by the STA devices to complete the detection tasks may also be different. Therefore, the AP device may wait for all detection tasks to be returned in this step (or wait for all STA devices to feed back values of interference measurement factors). For example, assuming that the AP device allocates a STA device 1 to detect a channel 1, allocates a STA device 2 to detect a channel 2 and a channel 3, and allocates to a STA device 3 to detect a channel 4, a channel 5, and a channel 6, the AP device may first receive a value that is of an interference measurement factor of the channel 1 and that is returned by the STA device 1, and then receive values that are of interference measurement factors of the channel 2 and the channel 3 and that are returned by the STA device 2 to the AP device, and finally receives values that are of interference measurement factors of the channel 4, the channel 5, and the channel 6 and that are returned by the STA device 3. The AP device needs to wait for the STA device 3 to return the values of the interference measurement factors of the channel 4, the channel 5, and the channel 6. Certainly, the foregoing is merely an example, and a sequence of feeding back by the STA device to the AP device is not limited to the foregoing sequence. For example, the AP device may first receive the values that are of the interference measurement factors of the channel 2 and the channel 3 and that are fed back by the STA device 2, and then receive the value that is of the interference measurement factor of the channel 1 and that is fed back by the STA device 1. This is not limited in this application.

In a possible implementation, a second timer may be set in step 8, and the second timer is configured to determine whether feedback results of all to-be-detected channels are received. After the second timer expires, if detection results fed back by some STA devices are not received, or detection results of some channels are not received, received detection results may be first processed, and then the STA devices are reallocated to process detection tasks. For example, assuming that duration of the second timer is 1 minute, and the AP device allocates the STA device 1 to detect the channel 1, allocates the STA device 2 to detect the channel 2 and the channel 3, and allocates the STA device 3 to detect the channel 4, the channel 5, and the channel 6, the AP device first receives the value that is of the interference measurement factor of the channel 1 and that is returned by the STA device 1, and then receives the values that are of the interference measurement factors of the channel 2 and the channel 3 and that are returned by the STA device 2 to the AP device. After time of the timer exceeds 1 minute, the AP device does not receive the values that are of the interference measurement factors of the channel 4, the channel 5, and the channel 6 and that are returned by the STA device 3. In this case, the AP device may reallocate the STA devices, for example, may allocate a STA device 4 to perform interference detection on the channel 4, the channel 5, and the channel 6.

Step 9: The channel detection scheduling module of the AP device sends the interference measurement factor of the channel to a channel interference calculation module of the AP device.

Step 10: The channel interference calculation module of the AP device calculates an interference index and an interference type of each channel based on the interference measurement factor.

Step 11: The channel interference calculation module of the AP device sends the interference index and the interference type of each channel to a channel decision module.

Step 12: The channel decision module of the AP device determines an interference avoidance manner based on the interference type of the channel.

It should be understood that, for step 1 to step 3 in the embodiment shown in FIG. 7A and FIG. 7B, refer to the description of S301 in the embodiment shown in FIG. 3, for step 4 to step 6, refer to the descriptions of S302 and S303 in the embodiment shown in FIG. 3, for step 7 to step 8, refer to the description of S304 in the embodiment shown in FIG. 3, for step 9 to step 10, refer to the description of S505 in the embodiment shown in FIG. 5, and for step 11 to step 12, refer to the related description of S606 in the embodiment shown in FIG. 6. Details are not described herein again.

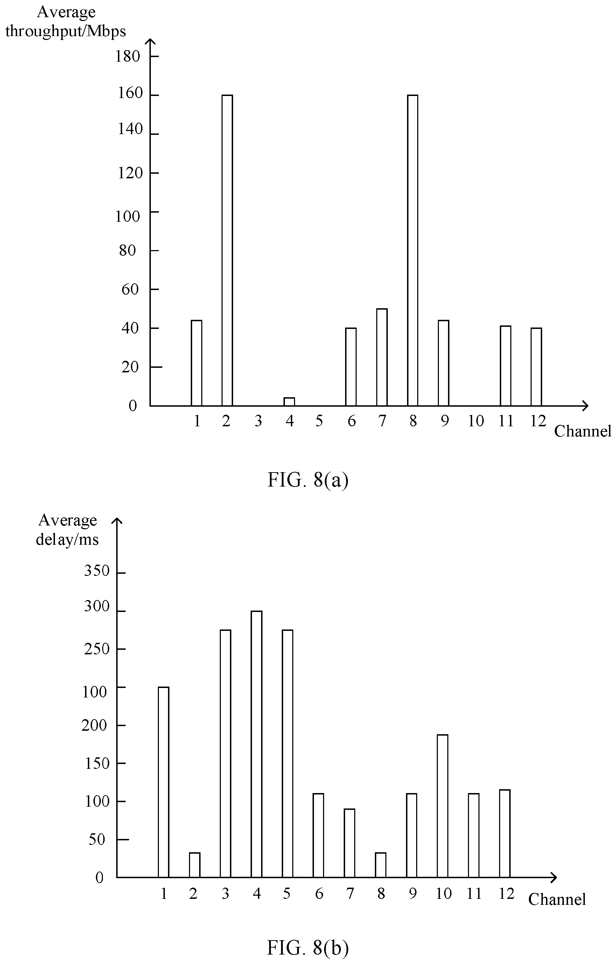

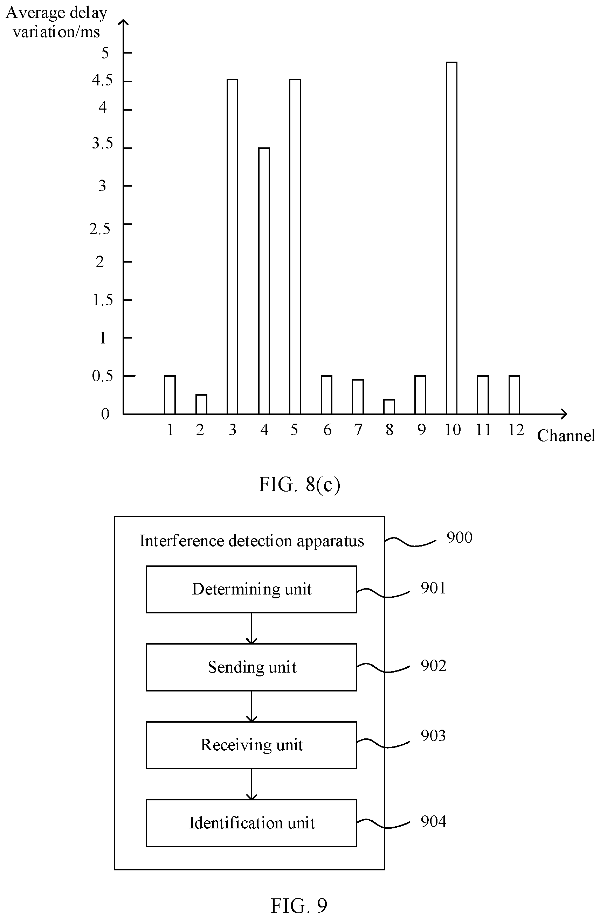

For example, 2.4G Wi-Fi is used as an example (a 2.4G band has the greatest interference). Interference measurement factors of channels 1 to 12 are calculated in a unified manner, an interference source is accurately identified, and a current optimal channel in the channels 1 to 12 is found, to achieve a highest throughput rate, a lowest delay, and lowest variation that are of a home Wi-Fi network. FIG. 8(a) to FIG. 8(c) are schematic diagrams of channel interference detection results according to an embodiment of this application. Refer to FIG. 8(a) to FIG. 8(c). FIG. 8(a) to FIG. 8(c) show schematic diagrams of three dimensions: (a) average throughput, (b) average delay, and (c) average delay variation.

FIG. 8(a) to FIG. 8(c) are schematic diagrams of results obtained by establishing an NS3 simulation environment based on a channel scanning result of a current home Wi-Fi network of a smart home. Channels 2 to 6 are interference channels. It can be obtained from the schematic diagrams shown in FIG. 8(a) to FIG. 8(c) that:

(1) Quality of inter-frequency channels and channels far away from interference is the best, for example, channels 2 and 8.
(2) When an interference signal is strong, adjacent-channel interference has a great impact. For example, a channel 2 has better performance than a channel 1.
(3) When intra-frequency channels need to overlap (inter-frequency idle channels cannot be found), less quantity of interference signals indicates better performance. For example, a channel 6 is better than a channel 5 and a channel 4.

Based on the foregoing embodiments, this application further provides an interference detection apparatus 900. The apparatus may be the AP device in the foregoing embodiments. Refer to FIG. 9. The interference detection apparatus 900 may include a determining unit 901, a sending unit 902, and a receiving unit 903.

The determining unit 901 is configured to determine a first STA device, where the first STA device is any one idle STA device of a plurality of STA devices connected to an AP device. The sending unit 902 is configured to send an interference detection indication message to the first STA device, where the interference detection indication message includes a first channel identifier and a required first interference measurement factor, a to-be-detected channel identifier includes the first channel identifier, and the first interference measurement factor is an interference measurement factor of a first channel corresponding to the first channel identifier. The receiving unit 903 is configured to receive an interference detection result fed back by the first STA device, where the interference detection result includes a value of the first interference measurement factor.

In a possible implementation, the determining unit 901 is specifically configured to determine the first STA device in the following manner:
obtaining traffic information of a plurality of STA devices connected to the determining unit 901; and if traffic information of a STA device is less than a specified threshold within specified duration, determining that the STA device is an idle STA device, and using any one STA device of idle STA devices as the first STA device.

In a possible implementation, the first interference measurement factor includes at least one of the following information: a channel identifier, a channel occupancy ratio, a quantity of co-channel neighboring AP devices, a quantity of overlapped-channel neighboring AP devices, a noise floor, channel power, a retransmission rate, average backoff duration, and a non-Wi-Fi interference ratio.

In a possible implementation, the apparatus further includes: an identification unit 904, where the identification unit 904 is configured to identify channel interference from the first channel based on the interference detection result, to obtain a channel interference index and an interference type of the first channel.

The determining unit 901 is further configured to determine an interference avoidance manner of the first channel based on the interference type of the first channel.

In a possible implementation, the determining unit 901 is specifically configured to determine the interference avoidance manner of the first channel based on the interference type of the first channel in the following manner:
When the interference type of the first channel is co-channel interference, the AP device determines to switch the first channel to a second channel, where an interference index of the second channel is lower than the interference index of the first channel. When the interference type of the first channel is adjacent-channel interference, the AP device determines to reduce a first bandwidth of the first channel to a second bandwidth.

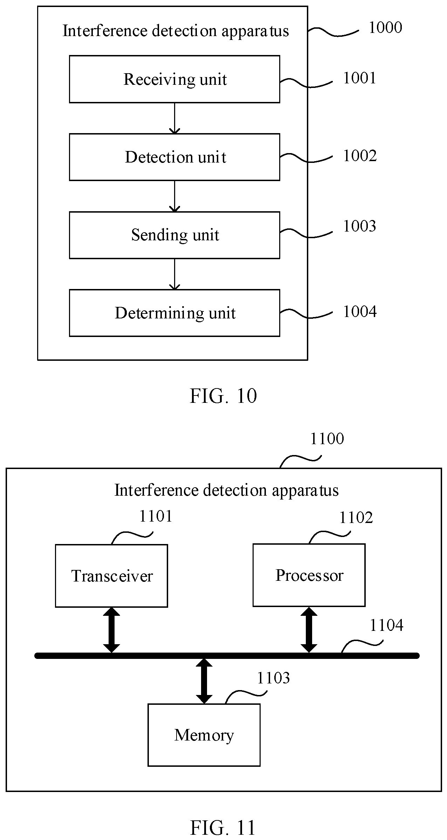

Based on the foregoing embodiments, this application further provides an interference detection apparatus 1000. The apparatus may be the STA device in the foregoing embodiments. As shown in FIG. 10, the interference detection apparatus 1000 may include a receiving unit 1001, a detection unit 1002, and a sending unit 1003.

The receiving unit 1001 is configured to receive an interference detection indication message sent by an AP device, where the interference detection indication message includes a first channel identifier and a required first interference measurement factor, a to-be-detected channel identifier includes the first channel identifier, and the first interference measurement factor is an interference measurement factor of a first channel corresponding to the first channel identifier. The detection unit 1002 is configured to perform channel interference detection based on the interference detection indication message received by the receiving unit, to obtain an interference detection result. The sending unit 1003 is configured to send the interference detection result to the AP device, where the interference detection result includes a value of the first interference measurement factor.

In a possible implementation, the first interference measurement factor includes at least one of the following information: a channel identifier, a channel occupancy ratio, a quantity of co-channel neighboring AP devices, a quantity of overlapped-channel neighboring AP devices, a noise floor, channel power, a retransmission rate, average backoff duration, and a non-Wi-Fi interference ratio.

In a possible implementation, the apparatus further includes: a determining unit 1004, configured to determine to execute the interference detection indication message sent by the AP device.

In a possible implementation, the sending unit 1003 is further configured to send, to the AP device, a feedback message for rejecting performing interference detection, so that the AP device sends an interference detection indication message to a second STA device.

It should be noted that all or some embodiments in this application may be freely and randomly combined. The technical solutions obtained through combination also fall within the scope of this application.

It should be noted that the AP device may also be an access point on an access device. For example, one access device includes two access points. The access point herein may also be the AP device in this application.

Based on the foregoing embodiments, an embodiment of this application further provides an interference detection apparatus 1100. The apparatus may be the AP device or the STA device in the foregoing embodiments. The apparatus is configured to implement the methods in embodiments shown in FIG. 3, FIG. 5, FIG. 6, and FIG. 7A and FIG. 7B. Refer to FIG. 11. The interference detection apparatus 1100 includes a transceiver 1101, a processor 1102, and a memory 1103. The transceiver 1101, the processor 1102, and the memory 1103 are connected to each other. It should be understood that the transceiver 1101 is configured to perform the steps performed by the sending unit and the receiving unit in embodiments shown in FIG. 8(a) to FIG. 8(c) and FIG. 9. The processor 1102 is configured to perform the steps performed by the determining unit, the identification unit, and the detection unit in embodiments shown in FIG. 8(a) to FIG. 8(c) and FIG. 9.

Optionally, the transceiver 1101, the processor 1102, and the memory 1103 are connected to each other by using the bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The memory 1103 is configured to store program instructions, data, and the like. Specifically, the program instructions may include program code. The program code includes computer operation instructions. The memory 1103 may include a random access memory (random access memory, RAM), or may further include a non-volatile memory (non-volatile memory), for example, at least one disk memory. The processor 1102 executes the program instructions and the data stored in the memory 1103, to implement the foregoing functions, thereby implementing the methods provided in the foregoing embodiments.

For example, the transceiver 1101 may be configured to: send an interference detection indication message to a STA device; and receive an interference detection result fed back by the STA device. The processor 1102 may be configured to: perform channel interference detection based on the interference indication message, to obtain an interference detection result; identify channel interference from a channel based on the interference detection result, to obtain a channel interference index and an interference type of the channel; and determine an interference avoidance manner of the channel based on the interference type of the channel.

Based on the foregoing embodiments, this application further provides a chip. The chip is configured to read a computer program stored in a memory, to implement the methods provided in the foregoing embodiments.

Based on the foregoing embodiments, this application further provides a computer storage medium. The computer storage medium stores a computer program. When the computer program is executed by a computer, the computer is enabled to perform the methods provided in the foregoing embodiments.

Based on the foregoing embodiments, this application further provides a computer program product. When the computer program product is run on a wireless access point device, the wireless access point device is enabled to perform the methods provided in the foregoing embodiments.

Based on the foregoing embodiments, this application further provides a computer program product. When the computer program product is run on a station device, the station device is enabled to perform the methods provided in the foregoing embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can indicate a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

**Claims**

1. An interference detection method, applied to a wireless access point device, wherein the wireless access point device is connected to a plurality of station devices, and the method comprises:

    determining, by the wireless access point device, a first station device, wherein the first station device is any one idle station device of the plurality of station devices connected to the wireless access point device;
    sending, by the wireless access point device, an interference detection indication message to the first station device, wherein the interference detection indication message comprises a first channel identifier and a required first interference measurement factor, a to-be-detected channel identifier comprises the first channel identifier, and the first interference measurement factor is an interference measurement factor of a first channel corresponding to the first channel identifier; and
    receiving, by the wireless access point device, an interference detection result fed back by the first station device, wherein the interference detection result comprises a value of the first interference measurement factor.

2. The method according to claim 1, wherein the determining, by the wireless access point device, a first station device comprises:

    obtaining, by the wireless access point device, traffic information of the plurality of station devices connected to the wireless access point device; and
    if traffic information of a station device is less than a specified threshold within specified duration, determining that the station device is an idle station device, and using any one station device of the idle station devices as the first station device.

3. The method according to claim 2, wherein the idle station devices further comprises a second station device; and the method further comprises:

    sending, by the wireless access point device, an interference detection indication message to the second station device, wherein the interference detection indication message comprises a second channel identifier and a required second interference measurement factor, a to-be-detected channel identifier comprises the second channel identifier, and the second interference measurement factor is an interference measurement factor of a second channel corresponding to the second channel identifier; and
    receiving, by the wireless access point device, an interference detection result fed back by the second station device, wherein the interference detection result comprises a value of the second interference measurement factor.

4. The method according to claim 1 or 2, wherein the method further comprises:
    determining, by the wireless access point device, a third station device, wherein the third station device is any one non-idle station device of the plurality of station devices connected to the wireless access point device, and traffic information of the third station device is greater than the specified threshold within the specified duration.

5. The method according to claim 4, wherein when it is detected that the traffic information of the third station device is less than the specified threshold within the specified duration and traffic information of the first station device is greater than the specified threshold within the specified duration, the method further comprises:

    skipping sending, by the wireless access point device, an interference detection indication message to the first station device, and sending, by the wireless access point device, an interference detection indication message to the third station device, wherein the interference detection indication message comprises a third channel identifier and a required third interference measurement factor, a to-be-detected channel identifier comprises the third channel identifier, and the third interference measurement factor is an interference measurement factor of a third channel corresponding to the third channel identifier; and
    receiving, by the wireless access point device, an interference detection result fed back by the third station device, wherein the interference detection result comprises a value of the third interference measurement factor.

6. The method according to claim 5, wherein the detection manner comprises either of real-time detection and periodic detection.

7. The method according to claim 1, wherein the first interference measurement factor comprises at least one of the following information: a channel identifier, a channel occupancy ratio, a quantity of co-channel neighboring wireless access point devices, a quantity of overlapped-channel neighboring wireless access point devices, a noise floor, channel power, a retransmission rate, average backoff duration, and a non-Wi-Fi interference ratio.

8. The method according to any one of claims 1 to 7, wherein the method further comprises:

    identifying, by the wireless access point device, channel interference from the first channel based on the interference detection result, to obtain a channel interference index and an interference type of the first channel; and determining, by the wireless access point device, an interference avoidance manner of the first channel based on the interference type of the first channel.

9. The method according to claim 8, wherein the determining, by the wireless access point device, an interference avoidance manner of the first channel based on the interference type of the first channel comprises:

    when the interference type of the first channel is co-channel interference, determining, by the wireless access point device, to switch the first channel to the second channel, wherein an interference index of the second channel is lower than the interference index of the first channel; and
    when the interference type of the first channel is adjacent-channel interference, determining, by the wireless access point device, to reduce a first bandwidth of the first channel to a second bandwidth.

10. An interference detection method, applied to a first station device, wherein the first station device is any one idle station device of a plurality of station devices connected to a wireless access point device, and the method comprises: receiving, by the first station device, an interference detection indication message sent by the wireless access point device, wherein the interference detection indication message comprises a first channel identifier and a required first interference measurement factor, a to-be-detected channel identifier comprises the first channel identifier, and the first interference measurement factor is an interference measurement factor of a first channel corresponding to the first channel identifier;

    performing, by the first station device, channel interference detection based on the interference indication message, to obtain an interference detection result; and
    sending, by the first station device, the interference detection result to the wireless access point device, wherein the interference detection result comprises a value of the first interference measurement factor.

11. The method according to claim 10, wherein before the receiving, by the first station device, an interference detection indication message sent by the wireless access point device, the method further comprises: receiving, by the first station device, a notification message sent by the wireless access point device, wherein the notification message notifies that the first station device is an idle station device.

12. The method according to claim 10 or 11, wherein the first station device is a station device whose traffic information determined by the wireless access point device is less than a specified threshold within specified duration.

13. The method according to claim 10, wherein the first interference measurement factor comprises at least one of the following information: a channel identifier, a channel occupancy ratio, a quantity of co-channel neighboring wireless access point devices, a quantity of overlapped-channel neighboring wireless access point devices, a noise floor, channel power, a retransmission rate, average backoff duration, and a non-Wi-Fi interference ratio.

14. The method according to any one of claims 10 to 13, wherein after the receiving, by the first station device, an interference detection indication message sent by the wireless access point device, the method further comprises: determining, by the first station device, to execute the interference detection indication message sent by the wireless access point device.

15. The method according to any one of claims 10 to 14, wherein the method further comprises: sending, by the first station device to the wireless access point device, a feedback message for rejecting performing interference detection, to enable the wireless access point device to send the interference detection indication message to a second station device.

16. A wireless access point device, comprising one or more processors, one or more memories, and one or more computer programs, wherein

the one or more computer programs are stored in the one or more memories, the one or more computer programs comprise instructions, and when the instructions are invoked and executed by the one or more processors, the wireless access point device is enabled to perform the following steps: determining a first station device, wherein the first station device is any one idle station device of a plurality of station devices connected to the wireless access point device; sending an interference detection indication message to the first station device, wherein the interference detection indication message comprises a first channel identifier and a required first interference measurement factor, a to-be-detected channel identifier comprises the first channel identifier, and the first interference measurement factor is an interference measurement factor of a first channel corresponding to the first channel identifier; and

receiving an interference detection result fed back by the first station device, wherein the interference detection result comprises a value of the first interference measurement factor.

17. The wireless access point device according to claim 16, wherein when the instructions are invoked and executed by the one or more processors, the wireless access point device is enabled to perform the following steps:

obtaining, by a station device, traffic information of the plurality of station devices connected to the station device; and

if traffic information of a station device is less than a specified threshold within specified duration, determining that the station device is an idle station device, and using any one station device of the idle station devices as the first station device.

18. The wireless access point device according to claim 17, wherein the idle station devices further comprise a second station device; and

when the instructions are invoked and executed by the one or more processors, the wireless access point device is enabled to perform the following steps:

sending an interference detection indication message to the second station device, wherein the interference detection indication message comprises a second channel identifier and a required second interference measurement factor, a to-be-detected channel identifier comprises the second channel identifier, and the second interference measurement factor is an interference measurement factor of a second channel corresponding to the second channel identifier; and

receiving an interference detection result fed back by the second station device, wherein the interference detection result comprises a value of the second interference measurement factor.

19. The wireless access point device according to claim 16 or 17, wherein when the instructions are invoked and executed by the one or more processors, the wireless access point device is enabled to further perform the following step:

determining a third station device, wherein the third station device is any one non-idle station device of the plurality of station devices connected to the wireless access point device, and traffic information of the third station device is greater than the specified threshold within the specified duration.

20. The wireless access point device according to claim 19, wherein when the instructions are invoked and executed by the one or more processors, the wireless access point device is enabled to further perform the following steps:

when it is detected that the traffic information of the third station device is less than the specified threshold within the specified duration and traffic information of the first station device is greater than the specified threshold within the specified duration, skipping sending an interference detection indication message to the first station device, and sending an interference detection indication message to the third station device, wherein the interference detection indication message comprises a third channel identifier and a required third interference measurement factor; a to-be-detected channel identifier comprises the third channel identifier, and the third interference measurement factor is an interference measurement factor of a third channel corresponding to the third channel identifier; and

receiving an interference detection result fed back by the third station device, wherein the interference detection result comprises a value of the third interference measurement factor.

21. The wireless access point device according to claim 20, wherein the detection manner comprises either of real-time detection and periodic detection.

22. The wireless access point device according to claim 16, wherein the first interference measurement factor comprises at least one of the following information: a channel identifier, a channel occupancy ratio, a quantity of co-channel neighboring wireless access point devices, a quantity of overlapped-channel neighboring wireless access point devices, a noise floor, channel power, a retransmission rate, average backoff duration, and a non-Wi-Fi interference ratio.

23. The wireless access point device according to any one of claims 16 to 22, wherein when the instructions are invoked and executed by the one or more processors, the wireless access point device is enabled to further perform the following steps:

identifying channel interference from the first channel based on the interference detection result, to obtain a channel interference index and an interference type of the first channel; and
determining an interference avoidance manner of the first channel based on the interference type of the first channel.

24. The wireless access point device according to claim 23, wherein when the instructions are invoked and executed by the one or more processors, the wireless access point device is enabled to specifically perform the following steps:

when the interference type of the first channel is co-channel interference, determining, by the wireless access point device, to switch the first channel to the second channel, wherein an interference index of the second channel is lower than the interference index of the first channel; and
when the interference type of the first channel is adjacent-channel interference, determining, by the wireless access point device, to reduce a first bandwidth of the first channel to a second bandwidth.

25. A first station device, comprising one or more processors, one or more memories, and one or more computer programs, wherein
the one or more computer programs are stored in the one or more memories, the one or more computer programs comprise instructions, and when the instructions are invoked and executed by the one or more processors, the first station device is enabled to perform the following steps:

receiving an interference detection indication message sent by a wireless access point device, wherein the interference detection indication message comprises a first channel identifier and a required first interference measurement factor, a to-be-detected channel identifier comprises the first channel identifier, and the first interference measurement factor is an interference measurement factor of a first channel corresponding to the first channel identifier;
performing channel interference detection based on the interference detection indication message received by the receiving unit, to obtain an interference detection result; and
sending the interference detection result to the wireless access point device, wherein the interference detection result comprises a value of the first interference measurement factor.

26. The first station device according to claim 25, wherein when the instructions are invoked and executed by the one or more processors, before receiving the interference detection indication message sent by the wireless access point device, the first station device is enabled to perform the following step:
receiving a notification message sent by the wireless access point device, wherein the notification message notifies that the first station device is an idle station device.

27. The first station device according to claim 25 or 26, wherein the first station device is a station device whose traffic information determined by the wireless access point device is less than a specified threshold within specified duration.

28. The first station device according to claim 25, wherein the first interference measurement factor comprises at least one of the following information: a channel identifier, a channel occupancy ratio, a quantity of co-channel neighboring wireless access point devices, a quantity of overlapped-channel neighboring wireless access point devices, a noise floor, channel power, a retransmission rate, average backoff duration, and a non-Wi-Fi interference ratio.

29. The first station device according to any one of claims 25 to 28, wherein when the instructions are invoked and executed by the one or more processors, the first station device is enabled to perform the following step:
determining to execute the interference detection indication message sent by the wireless access point device.

30. The first station device according to any one of claims 25 to 29, wherein when the instructions are invoked and executed by the one or more processors, the first station device is enabled to perform the following step: sending, to the wireless access point device, a feedback message for rejecting performing interference detection, to enable the wireless access point device to send the interference detection indication message to a second station device.

31. A computer-readable storage medium, wherein the computer-readable storage medium stores instructions, and when the instructions are run on a computer, the computer is enabled to perform the method according to any one of claims 1 to 9, or perform the method according to any one of claims 10 to 15.

32. A computer program product, wherein when the computer program product is run on a wireless access point device, the wireless access point device is enabled to perform the method according to any one of claims 1 to 9.

33. A computer program product, wherein when the computer program product is run on a first station device, the first station device is enabled to perform the method according to any one of claims 10 to 15.

Smart screen

Sound box

Router

Mobile phone

FIG. 1

**AP device**

Topology module

Channel interference calculation module

Channel decision module

Task scheduling and result feedback

Channel detection scheduling module

**STA device**

Channel detection module

Interference scanning module

FIG. 2

AP device

First STA device

S301: The AP device determines the first STA device

S302: First interference detection indication message

S303: The first STA device performs interference detection based on a channel identifier included in the interference detection indication information, to obtain an interference detection result

S304: Interference detection result

FIG. 3

## FIG. 4

Total time

CCA is idle — Idle

CCA is busy

Sending time

Non-Wi-Fi interference

Receiving time

IBSS packet

OBSS packet

Idle

Self-occupied

Interference-occupied

## FIG. 5

AP device

First STA device

S501: The AP device determines the first STA device

S502: First interference detection indication message

S503: The first STA device performs interference detection based on a channel identifier included in the interference detection indication information, to obtain an interference detection result

S504: Interference detection result

S505: The AP device identifies channel interference based on the interference detection result, to obtain an interference index and an interference type of a channel

```
┌─────────────────┐                           ┌──────────────────┐
│    AP device    │                           │ First STA device │
└─────────────────┘                           └──────────────────┘
         │                                              │
┌──────────────────────────────┐                        │
│ S601: The AP device determines the first│              │
│           STA device          │                        │
└──────────────────────────────┘                        │
         │                                              │
         │  S602: First interference detection indication message │
         │───────────────────────────────────────────────→│
         │                                              │
         │          ┌───────────────────────────────────────┐
         │          │ S603: The first STA device performs    │
         │          │ interference detection based on a channel│
         │          │ identifier included in the interference │
         │          │ detection indication information, to obtain│
         │          │ an interference detection result        │
         │          └───────────────────────────────────────┘
         │                                              │
         │          S604: Interference detection result  │
         │←───────────────────────────────────────────────│
         │                                              │
┌──────────────────────────────┐                        │
│ S605: The AP device identifies channel │                │
│ interference based on the interference │                │
│ detection result, to obtain an interference│            │
│ index and an interference type of a channel│            │
└──────────────────────────────┘                        │
         │                                              │
┌──────────────────────────────┐                        │
│ S606: The AP device determines an      │                │
│ interference avoidance manner based on │                │
│ the interference type of the channel, and│              │
│ performs interference avoidance in the │                │
│ determined interference avoidance manner│               │
└──────────────────────────────┘                        │
         │                                              │
```

FIG. 6

STA device
- Channel detection module
- Interference scanning module

AP device
- Wi-Fi module
- Topology module
- Channel interference calculation module
- Channel decision module
- Channel detection scheduling module

Step 1: Trigger a channel optimization instruction

Step 2: Obtain the STA device accessing the AP device and a traffic condition of each STA device

Step 3: Obtain a list of idle STA devices, and allocate a detection channel to the STA device

Step 4: Send an interference detection instruction

Step 5: Execute the interference detection instruction

Cannot be executed    No

Yes

TO FIG. 7B

TO FIG. 7B

TO FIG. 7B

TO FIG. 7B

FIG. 7A

Step 6: Drive
channel scanning,
to obtain an
interference
measurement
factor of a channel

Step 7: Interference
measurement factor
of the channel

Step 8: Interference
measurement factor
of the channel

Step 9: Interference measurement
factor of the channel

Step 10: Calculate
an interference
index and an
interference type of
each channel based
on the interference
measurement factor

Step 11: Interference
index and
interference type of
each channel

Step 12: Determine
an interference
avoidance manner
based on the
interference type
of the channel

FIG. 7B

EP 4 354 930 A1

FIG. 8(a)

FIG. 8(b)

FIG. 8(c)

FIG. 9

Interference detection apparatus — 1000

Receiving unit — 1001

Detection unit — 1002

Sending unit — 1003

Determining unit — 1004

FIG. 10

1100

Interference detection apparatus

1101
Transceiver

1102
Processor

1104

1103
Memory

FIG. 11

## INTERNATIONAL SEARCH REPORT

| International application No. |
| --- |
| **PCT/CN2022/106420** |

| **A.** | **CLASSIFICATION OF SUBJECT MATTER** |
| --- | --- |

H04W 16/14(2009.01)i

According to International Patent Classification (IPC) or to both national classification and IPC

| **B.** | **FIELDS SEARCHED** |
| --- | --- |

Minimum documentation searched (classification system followed by classification symbols)

H04W; H04B; H04L; H04Q

Documentation searched other than minimum documentation to the extent that such documents are included in the fields searched

Electronic data base consulted during the international search (name of data base and, where practicable, search terms used)

CNKI, CNPAT, EPODOC, WPI, 3GPP: 干扰, 检测, 测量, 监测, 接入点, AP, 站点, STA, 指示, 空闲, 度量, interference, detect, monitor, access point, station, indicat+, idle, leisure, measure+

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | US 2016087897 A1 (ARRIS ENTERPRISES, INC.) 24 March 2016 (2016-03-24) description, paragraphs [0023]-[0072], and figures 3 and 4 | 1-33 |
| A | CN 107040984 A (CHINA ACADEMY OF TELECOMMUNICATIONS TECHNOLOGY) 11 August 2017 (2017-08-11) entire document | 1-33 |
| A | CN 104737561 A (HUAWEI TECHNOLOGIES CO., LTD.) 24 June 2015 (2015-06-24) entire document | 1-33 |
| A | WO 2019030779 A1 (CENTRE FOR DEVELOPMENT OF TELEMATICS) 14 February 2019 (2019-02-14) entire document | 1-33 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 September 2022** | **23 September 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/106420**

| Patent document cited in search report | | | Publication date (day/month/year) | Patent family member(s) | | | Publication date (day/month/year) |
|---|---|---|---|---|---|---|---|
| US | 2016087897 | A1 | 24 March 2016 | WO | 2016049033 | A1 | 31 March 2016 |
| | | | | EP | 3183901 | A1 | 28 June 2017 |
| CN | 107040984 | A | 11 August 2017 | WO | 2017133443 | A1 | 10 August 2017 |
| CN | 104737561 | A | 24 June 2015 | US | 2014119300 | A1 | 01 May 2014 |
| | | | | WO | 2014070674 | A1 | 08 May 2014 |
| WO | 2019030779 | A1 | 14 February 2019 | US | 2020221466 | A1 | 09 July 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110875671